# EUROPEAN PATENT APPLICATION

(11) **EP 2 233 248 A1**
(43) Date of publication of application: **29.09.2010**
(21) Application number: 09700773.6
(22) Date of filing: 08.01.2009
(51) Int. Cl.: B24B 13/00, B24B 41/06, B24B 49/12, G01B 11/24

(54) **GRINDING DEVICE FOR MANUFACTURING OPTICAL ELEMENT, METHOD FOR MANUFACTURING OPTICAL ELEMENT AND PRECISE MEASUREMENT DEVICE FOR PRECISELY MEASURING SHAPE AND SIZE OF DIE ASSEMBLY OR OPTICAL ELEMENT USED FOR MANUFACTURING OPTICAL ELEMENT**

(30) Priority: 10.01.2008 JP 2008003479
(71) Applicant: Nano-Optonics Energy, Inc., Kyoto 606-8501 (JP)
(72) Inventor: KINO, Masaru, Nagoya-shi Aichi 462-0013 (JP); KURITA, Mikio, Nagoya-shi Aichi 464-0014 (JP); IWAMURO, Fumihide, Kyoto-shi Kyoto 602-0044 (JP); SHIMONO, Atsushi, Osaka-shi Osaka 538-0043 (JP); MAIHARA, Toshinori, Kyoto-shi Kyoto 602-0943 (JP); TOKORO, Hitoshi, Kariya-shi Aichi 448-0028 (JP); NAKAJIMA, Yu, Kyoto-shi Kyoto 612-0801 (JP)
(74) Representative: Gillam, Francis Cyril
(86) International application number: PCT/JP2009/050783
(87) International publication number: WO 2009/088106

(57) **Abstract**

When a large optical device is incorporated into a large telescope or the like, a support state and a load distribution are different from those when an object to be ground is placed on a workpiece supporting fixture of a processing machine, and a surface shape measured in a state of being mounted on the processing machine is different from a surface shape in an incorporated state. Thus, there has been no apparatus for manufacturing an optical device that is deformed by its own weight. The present invention provides a grinding apparatus for manufacturing an optical device that is deformed by its own weight, including a workpiece supporting fixture having a workpiece support surface shaped so as to closely contact a rear surface opposite to a ground surface of an object to be ground that is to be an optical device in a grinding state, wherein a plurality of piezoelectric actuator holes each having an open portion in the workpiece support surface and a central axis oriented vertically are provided at predetermined hole locations of the workpiece supporting fixture, and a piezoelectric actuator and a load cell are incorporated in each of the piezoelectric actuator holes in a liftable manner.

## Description

### Technical Field

The present invention relates to a grinding apparatus for manufacturing an optical device that is deformed by its own weight. The present invention also relates to a method for manufacturing an optical device that is deformed by its own weight. Furthermore, the present invention relates to a precise measuring apparatus for precisely measuring the shape and size of a mold used to manufacture an optical device, or the shape and size of an optical device. In the present description, the term "optical device" includes lenses and reflecting mirrors.

The present invention has been designed and manufactured as a novel combined precise grinding machine in which an optical interferometer device is integrated with a grinding machine, and, mainly, relates to the manufacture of a concave aspherical optical device and a convex aspherical optical device such as a special reflecting mirror and an optical lens.

### Background Art

High-precision reflecting mirrors and lenses having a concave aspherical shape include those having an axisymmetric aspherical shape that is rotation symmetric, and those having an off-symmetry-axis non-axisymmetric aspherical shape, both of which are difficult to manufacture and test for accuracy in a normal grinding method. Thus, useful as it is, the reflecting mirrors and the lenses having a concave aspherical shape can be manufactured into only a few examples in actual use.

Reflecting mirrors and lenses used in normal optical systems such as cameras and projectors have a rotation-symmetric surface shape. Examples of a conventional manufacturing method include a method of mounting a reflecting mirror or a lens material on a rotating chuck of a precision NC lathe, and performing cutting while controlling the shape with diamond bite, and a method of fixing a lens material to a horizontal turntable, and shaping an aspherical surface with a grindstone wheel that spins at a relatively high speed while rotating the table. In the above methods, on-machine measurement of the shape of a ground surface using contact and/or noncontact displacement meters has been performed.

### First problem

When a large optical device is incorporated into a product such as a large telescope, a support state and a load distribution are different from those when an object to be ground is placed on a workpiece supporting fixture of a processing machine itself during grinding. Thus, a surface shape measured in a state of being mounted on the grinding machine is different from an actual product surface shape. In other words, the large optical device is deformed by its own weight.

In a reflecting mirror surface or a lens surface having a large size so as to be inevitably deformed by its own weight, or a relatively thin optical device, the reflecting mirror surface or the lens surface changes in shape when a reflecting mirror or a lens is detached after grinding and is incorporated into a telescope, due to the load distribution of a lens material or the internal stress of the lens material accumulated during the grinding.

### Second problem

Also, there has been no method for precisely measuring the shape and size of an aspherical surface using a conventional optical interferometer.

### Disclosure of the Invention

The aforementioned first problem is solved by a grinding apparatus according to claim 1 of the present invention, that is, a grinding apparatus for manufacturing an optical device that is deformed by its own weight, including a workpiece supporting fixture having a workpiece support surface shaped so as to closely contact a rear surface opposite to a ground surface of an object to be ground that is to be an optical device in a grinding state, wherein a plurality of piezoelectric actuator holes each having an open portion in the workpiece support surface and a central axis oriented vertically are provided at predetermined hole locations of the workpiece supporting fixture, and a piezoelectric actuator and a load cell are incorporated in each of the piezoelectric actuator holes in a liftable manner.

In a preferred embodiment according to claim 2 of the present invention, a plurality of thermal expansion actuator holes each having an open portion in the workpiece support surface and a central axis oriented vertically are provided at predetermined sub hole locations, and a thermal expansion columnar component and a heater for heating the columnar component are incorporated in each of the thermal expansion actuator holes.

In another preferred embodiment according to claim 3 of the present invention, the grinding apparatus further includes a control device for creating a simulated floating support state by comparing a measured load value measured by each of the load cells and a calculated load value to be obtained when the aspherical optical device is incorporated into a product at each of the hole locations, and controlling a projecting length of the piezoelectric actuator at each of the hole locations such that a difference between the measured load value and the calculated load value is equal to or less than a predetermined value.

Also, the aforementioned first problem is solved by a method for manufacturing an optical device according to claim 4 of the present invention, that is, a method for manufacturing an optical device that is deformed by its own weight, by using a grinding apparatus for manufacturing an optical device that is deformed by its own weight, including a workpiece supporting fixture having a workpiece support surface shaped so as to closely contact a rear surface opposite to a ground surface of an object to be ground that is to be an optical device in a grinding state, wherein a plurality of piezoelectric actuator holes each having an open portion in the workpiece support surface and a central axis oriented vertically are provided at predetermined hole locations of the workpiece supporting fixture, and a piezoelectric actuator and a load cell are incorporated in each of the piezoelectric actuator holes in a liftable manner, the method including alternately performing: a measuring step of obtaining a dimensional difference by comparing an intermediate shape and size of a ground surface of an object to be ground and a target shape and size of the ground surface at a predetermined point on the ground surface in a simulated floating support state; and a grinding step of performing grinding based on the dimensional difference at the predetermined point on the ground surface in a grinding state in which the object to be ground is in close contact with the workpiece support surface, without moving the object to be ground from the grinding apparatus.

The aforementioned second problem is solved by a precise measuring apparatus for precisely measuring a shape and size of an optical device according to claim 5 of the present invention, that is, a precise measuring apparatus for precisely measuring a shape and size of a mold used to manufacture a non-axisymmetric convex aspherical optical device or a shape and size of a non-axisymmetric concave aspherical optical device, wherein a collimated light generating device, a half mirror, a CGH mask corresponding to a shape and size of a ground surface to be obtained, and a material to be ground that is to be a mold or an optical device are sequentially disposed, a reference flat surface is disposed adjacent to the material to be ground, zero-order diffracted light obtained by allowing collimated light from the collimated light generating device to travel straight through the CGH mask without being diffracted when transmitted through the CGH mask is projected onto the reference flat surface and light reflected from the reference flat surface is diffracted when transmitted through the CGH mask again to be first-order diffracted light, which is reflected by the half mirror and changes an optical path in a lateral direction to enter an interferometer as a first light beam, and first-order diffracted light obtained by diffracting collimated light from the collimated light generating device when transmitted through the CGH mask is projected onto the ground surface of the material to be ground and light reflected from the ground surface travels straight through the CGH mask without being diffracted when transmitted through the CGH mask again to be zero-order diffracted light, which is reflected by the half mirror and changes an optical path in the lateral direction to enter the interferometer as a second light beam, the collimated light generation source, the half mirror, the CGH mask, the material to be ground, the reference flat surface, and the interferometer being arranged such that the interferometer can observe an interference fringe between the first light beam and the second light beam.

Also, the aforementioned second problem is solved by a precise measuring apparatus for precisely measuring a shape and size of an optical device according to claim 6 of the present invention, that is, a precise measuring apparatus for precisely measuring a shape and size of a mold used to manufacture an axisymmetric convex aspherical optical device or a shape and size of an axisymmetric concave aspherical optical device, wherein a collimated light generating interferometer, a reference flat surface half mirror, and a null lens are sequentially disposed with optical axes of the collimated light generating interferometer, the reference flat surface half mirror, and the null lens being aligned with an axis of symmetry of a material to be ground that is to be a mold or an optical device.

Furthermore, the aforementioned second problem is solved by a precise measuring apparatus for precisely measuring a shape and size of an optical device according to claim 7 of the present invention, that is, a precise measuring apparatus for precisely measuring a mold used to manufacture an axisymmetric concave aspherical optical device, or an axisymmetric convex aspherical optical device, wherein an F-light generating device or a diverging light source with a given F-ratio, a half mirror, a Hindle shell whose upper surface has a convex shape with a larger aspherical degree than that of a ground surface to be obtained and whose lower surface has a same concave shape as that of the ground surface to be obtained, and which is designed such that F-light generated by the F-light generating device is transmitted through the half mirror and travels straight to enter the Hindle shell from the upper surface, be refracted, and be emitted in a normal direction from the lower surface, and a material to be ground that is to be a mold or an optical device are sequentially disposed with optical axes of the F-light generating device, the half mirror, the Hindle shell, and the material to be ground being aligned with an axis of symmetry of the material to be ground, and an interferometer is disposed lateral to the half mirror such that light reflected by the ground surface of the material to be ground is reflected by the half mirror after passing through the Hindle shell, changes an optical path in a lateral direction, and enters the interferometer.

### Advantages of the Invention

Any concave aspherical surfaces including those having an off-axis concave aspherical shape can be highly accurately shaped. According to the present invention, a ground surface having a concave aspherical shape is measured by a combination of a multipoint-load-monitoring floating supporting fixture, and a fully-integrated on-machine interferometer system using a CGH mask. A large optical device can be thereby ground and manufactured in consideration of incorporation into an apparatus in which the optical device needs to change its posture.

### Brief Description of the Drawings

Figure 1 is an elevational schematic view of an apparatus for processing and measuring a concave non-axisymmetric aspherical lens according to a second embodiment;
Figure 2 is an elevational schematic view of an apparatus for processing and measuring a concave non-axisymmetric aspherical lens according to a third embodiment;
Figure 3 is a partial elevational sectional view of a workpiece supporting fixture according to a first embodiment;

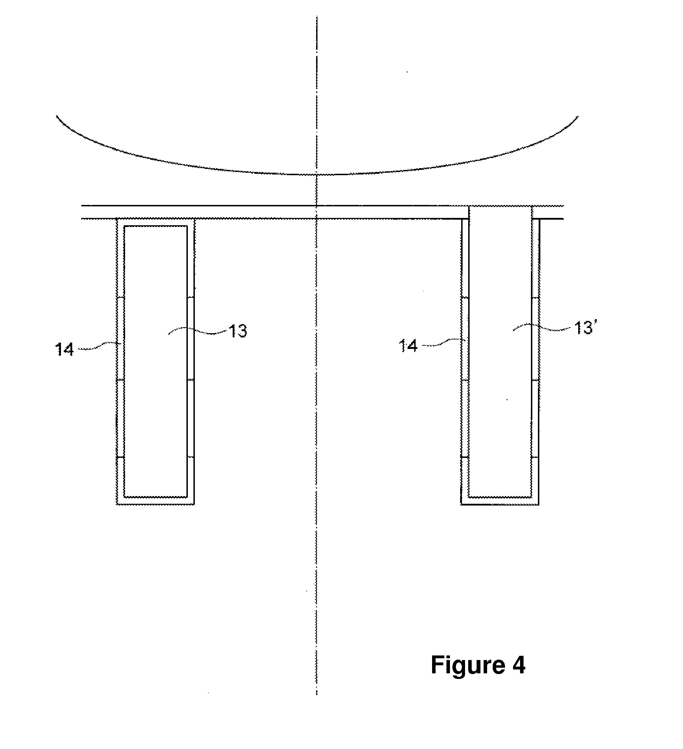

Figure 4 is a partial elevational sectional view of the workpiece supporting fixture according to the first embodiment;
Figure 5 is an elevational schematic view of an apparatus for processing and measuring a concave non-axisymmetric aspherical lens according to a fourth embodiment;
Figure 6 is an elevational schematic view of an apparatus for processing and measuring a convex aspherical lens according to a fifth embodiment; and
Figure 7 is a plan view of the workpiece supporting fixture according to the first embodiment.

### Best Mode for Carrying Out the Invention

Embodiments according to the present invention will be described in detail with reference to the accompanying drawings.

### First Embodiment (Workpiece supporting fixture)

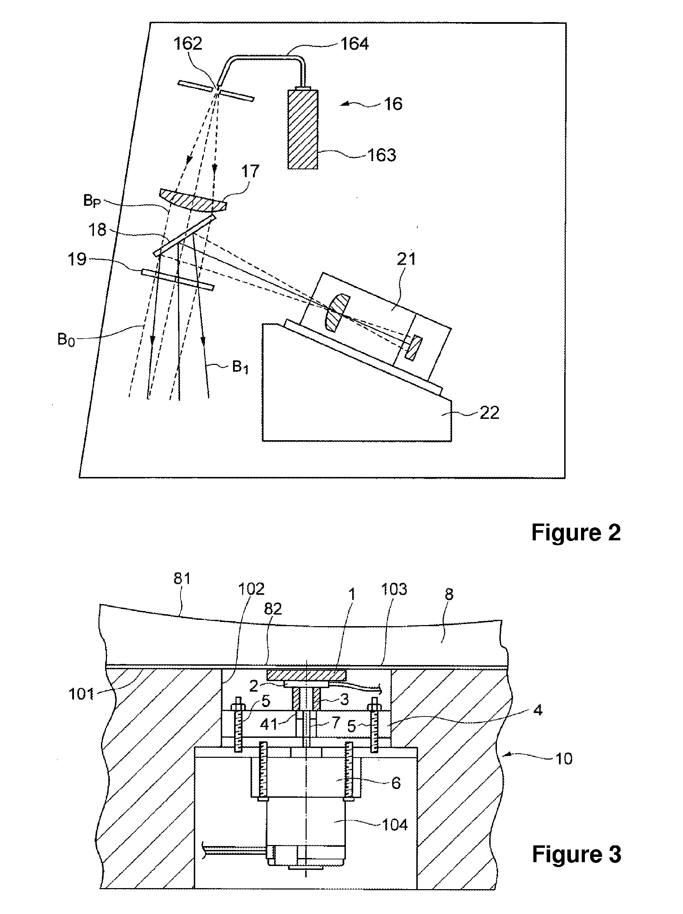

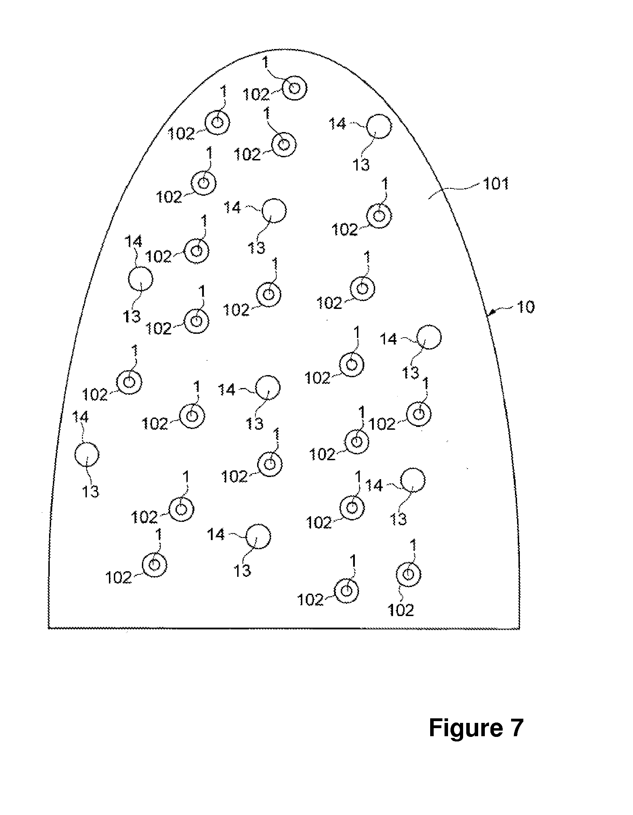

Figure 3 is a partial elevational sectional view of a workpiece supporting fixture according to a first embodiment. Figure 7 is a plan view of the workpiece supporting fixture according to the first embodiment.

A workpiece supporting fixture 10 is a fixture that supports an object to be ground 8 in a grinding state, and has a workpiece support surface 101 shaped so as to closely contact a rear surface 82 of the object to be ground 8 opposite to a ground surface 81. The object to be ground is also called workpiece, and in the present application, a lens material or a plastic material is used for an optical device, and a metal material is used for a mold. The workpiece supporting fixture is used when grinding is performed, by being controlled in synchronization with X-axis and Y-axis drive including rotation control. The workpiece supporting fixture 10 is arranged between the object to be ground 8 and a rotating table 11. The rotating table 11 is placed on an XY stage 12.

The workpiece supporting fixture 10 includes three or more, preferably, several tens of piezoelectric actuator holes 102 each incorporating, in a liftable manner, a piezoelectric actuator mechanism having a piezoelectric actuator 3, a load cell 2, and a supporting pad 1. An open portion 103 of each of the piezoelectric actuator holes 102 is flush with the workpiece support surface 101. A central axis 104 of each of the piezoelectric actuator holes 102 is vertically oriented. A lifting mechanism includes a movable stage 4 having a disk shape where a threaded hole 41 is provided in the center, guide pins 5 for guiding the movable stage 4 to move up and down in the direction of the central axis 104 while keeping a horizontal position, a threaded shaft 7 screwed with the threaded hole 41, and a geared motor 6 for rotating the threaded shaft 7 in forward and reverse directions. The piezoelectric actuator mechanism is precisely lifted up and down by the lifting mechanism.

The workpiece supporting fixture 10 also includes a plurality of thermal expansion actuator holes 105 each incorporating, in a liftable manner, an aluminum rod 13 as an example of a thermal expansion columnar component. When the aluminum rod 13 is heated by a heater 14, the aluminum rod 13 thermally expands, and its distal end projects from the thermal expansion actuator hole 105.

In the grinding state, the piezoelectric actuator mechanisms are housed in the piezoelectric actuator holes 102. The supporting pads 1 are located below the workpiece support surface 101. The aluminum rods 13 are housed in the thermal expansion actuator holes 105. The upper ends of the aluminum rods 13 are located below the workpiece support surface 101. The rear surface 82 of the object to be ground is supported on the workpiece support surface 101 in contact only with the workpiece support surface 101. That is, the supporting pads 1 are not in contact with the rear surface 82 of the object to be ground, and the upper ends of the aluminum rods 13 are also not in contact with the rear surface 82 of the object to be ground.

After one pass of grinding (that a grinding wheel performs scanning over the entire ground surface is called one pass) is completed and before the size and shape of the ground surface are precisely measured, the aluminum rods 13 are heated by the heaters 14 first, so that the aluminum rods 13 thermally expand. The upper ends thereof thereby project from the thermal expansion actuator holes 105, contact the rear surface 82 of the object to be ground, and slightly push up the object to be ground 8, to thereby sever the close contact between the object to be ground 8 and the workpiece support surface 101. Subsequently, the piezoelectric actuator mechanisms are lifted up by the lifting mechanisms, to thereby bring the supporting pads 1 into abutment against the rear surface 82 of the object to be ground 8. Subsequently, the piezoelectric actuators 3 are actuated, and the object to be ground 8 is maintained in a predetermined posture at a predetermined position in a slightly floating state. At this point, the object to be ground 8 is supported on each of the supporting pads 1, and each of the load cells 2 measures a load applied to each of the supporting pads 1. A measured load value measured by each of the load cells and a calculated load value to be obtained when an optical device as the object to be ground is incorporated into a product such as a large telescope are compared. The projecting length of the piezoelectric actuator at each hole location is precisely controlled such that a difference between the measured load value and the calculated load value is equal to or less than a predetermined value. Accordingly, a simulated floating support state is created.

In the simulated floating support state, the optical device as the object to be ground is deformed by its own weight in a similar manner to when the optical device is incorporated into a product such as a large telescope. In the simulated floating support state in which the optical device is deformed by its own weight in a similar manner to when incorporated into the product, the shape and size of the ground surface of the object to be ground are precisely measured. In a method for manufacturing an optical device according to the present invention, an apparatus in which a grinding grindstone 9, the workpiece supporting fixture 10, and a size and shape measuring mechanism such as an interferometer are integrally incorporated is used, so that the grinding and the shape and size precise measurement can be alternately performed by automatically switching the grinding state and the simulated floating support state on site by the workpiece supporting fixture 10 and a control device. Accordingly, the optical device deformed by its own weight can be precisely processed and manufactured.

Although the thermal expansion actuator can generate a large force at a low cost, the thermal expansion actuator cannot precisely increase and decrease a moving distance. Meanwhile, while the piezoelectric actuator can precisely increase and decrease a moving distance, it is very expensive. To separate the object to be ground from the close contact with the workpiece supporting fixture, a force three times as large as the static load of the object to be ground is required. When only the piezoelectric actuator were used to exert the force, the cost would much increase. Thus, the thermal expansion actuator is used to separate the object to be ground from the workpiece supporting fixture, and the piezoelectric actuator is used to precisely move the object to be ground after the separation. That is, the present invention attains both high accuracy of the moving distance and low cost of the apparatus.

### Second Embodiment (Processing and size and shape measurement of a concave non-axisymmetric aspherical lens)

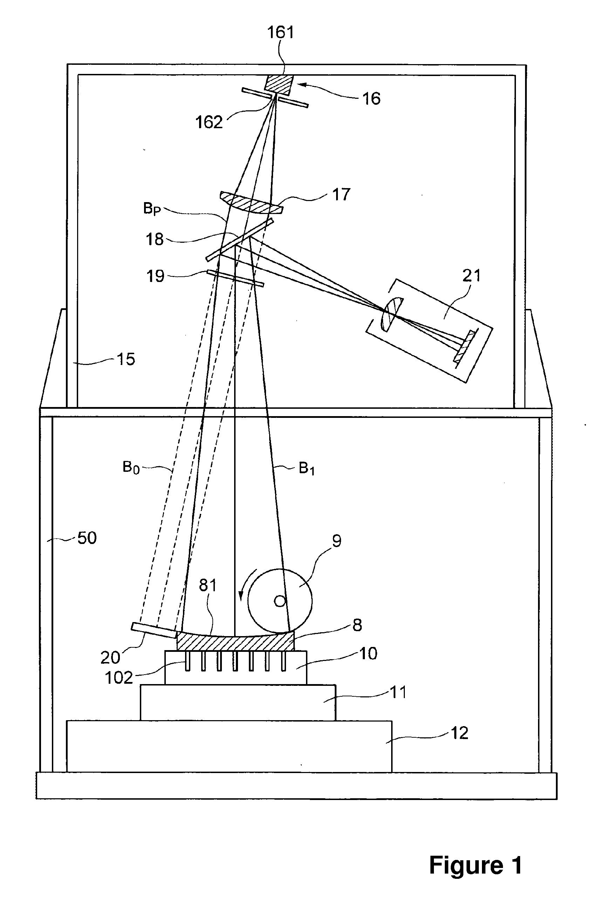

Figure 1 is an elevational schematic view of an apparatus for processing and measuring a concave non-axisymmetric aspherical lens according to a second embodiment.

A frame 50 integrally incorporates a processing section and a measuring section, and is placed on a base section constructed so as not to be affected by ambient vibrations. That is, the frame 50 is a vibration-free integral frame.

The measuring section of the apparatus for processing and measuring a concave non-axisymmetric aspherical lens according to the second embodiment will be described. A light source section 16 includes a laser light source 161 that is a normal helium-neon laser, an unillustrated objective lens, and a pinhole 162. The light source section 16 generates a base dot-like light source that generates a planar wavefront at 632.8 nm wavelength, and emits a diverging light beam with an F-ratio of about 4. A collimator lens 17 for collimating the light from the light source, a half mirror 18, and a CGH (computer-generated hologram) mask 19 corresponding to the shape and size of the ground surface to be obtained are sequentially disposed on the optical path. The half mirror 18 transmits the light beam from the light source section 16, and projects the light beam onto the ground surface 81 of the object to be ground 8, and a reference flat surface 20 disposed adjacent to the object to be ground 8. The half mirror 18 also reflects a reflected light beam from the ground surface 81 and a reflected light beam from the reference flat surface 20, and projects the light beams onto an interferometer 21. Zero-th-order diffracted light obtained by allowing the light beam from the light source section 16 to travel straight through the CGH mask 19 without being diffracted when transmitted through the CGH mask 19 is projected onto the reference flat surface 20, and light reflected from the reference flat surface 20 is diffracted when transmitted through the CGH mask 19 from the opposite direction to be first-order diffracted light, which is projected onto the half mirror 18. The CGH mask 19 is obtained by forming a two-dimensional interference fringe pattern calculated in advance by a computer based on the shape data of a concave non-axisymmetric aspherical surface to be obtained on a glass plate. First-order diffracted light obtained by diffracting the light beam from the light source section 16 when transmitted through the CGH mask 19 is projected onto the ground surface 81, and light reflected from the ground surface 81 travels straight through the CGH mask 19 without being diffracted when transmitted through the CGH mask 19 from the opposite direction to be zero-th-order diffracted light, which is projected onto the half mirror 18. A CCD camera is housed in the interferometer 21. An interference fringe obtained by allowing the reflected light from the ground surface and the reflected light from the reference flat surface to interfere with each other is thereby recorded. By changing the two-dimensional interference fringe pattern of the CGH mask, any aspherical surfaces including non-axisymmetric (off-axis) and axisymmetric surfaces can be precisely measured.

Next, the processing section of the apparatus for processing and measuring a concave non-axisymmetric aspherical lens according to the second embodiment will be described. To shape a target concave aspherical surface, a rough grinding grindstone, an intermediate grinding grindstone, and a finishing grinding grindstone are sequentially mounted on a grindstone wheel 9 that is mounted on a main spindle shaft of the grinding machine, and grinding is thereby performed. The object to be ground 8 on which concave aspherical processing is performed is placed on the workpiece supporting fixture 10. The workpiece supporting fixture 10 is placed on the XY stage 12. The XY stage 12 is placed on the rotating table 11. The rotation of the rotating table 11 can be controlled. The XY stage 12 is movable in X and Y directions. By performing the grinding while synchronizing the rotation control and the X-axis and Y-axis movement, off-axis aspherical processing is enabled.

The workpiece supporting fixture 10 is the same as that described in the first embodiment. The grinding and the shape and size precise measurement are alternately performed by automatically switching the grinding state in which the object to be ground 8 is supported in close contact, and the simulated floating support state in which the object to be ground 8 is slightly floated. With the apparatus for processing and measuring a concave non-axisymmetric aspherical lens according to the second embodiment, the measurement result can be immediately fed back to a grinding program as a correction.

The grinding machine is assumed to process a concave aspherical surface having a curvature radius of 10 m. The height of the light source position of the interferometer from the ground surface is about 10000 mm (10 m). Accordingly, a glass material having a maximum external diameter of 1400 mm can be manufactured into a segmented mirror having a concave aspherical surface (for example, a main mirror of a Ritchey-Chretien telescope) having an approximate curvature radius of up to 10000 mm. According to the second embodiment, a large concave mirror whose aperture exceeds 1 m, off-axis concave aspherical shape of which is very difficult to shape and measure in a conventional grinding method, can be ground and measured.

### Third Embodiment (Processing and size and shape measurement of a concave non-axisymmetric aspherical lens)

Figure 2 is an elevational schematic view of an apparatus for processing and measuring a concave non-axisymmetric aspherical lens according to a third embodiment. The third embodiment is similar to the second embodiment except for changes in the light source section 16 and the interferometer 21.

The light source section 16 includes a laser light source 163, a fiber light guide path 164 that is an optical fiber, an unillustrated objective lens and the pinhole 162. The laser light source 163 and the objective lens are connected through the light guide path 164. The interferometer 21 includes a camera lens and a CCD device, and is placed on a focal distance adjustment table 22.

The helium-neon laser light source 163 is a light source which generates light at 632.8 nm wavelength, and has intensity high enough to obtain an interference pattern by emitting light to the ground surface and the reference flat surface. One end of the fiber light guide path 164 is disposed close to the pinhole, to guide the light to the pinhole. The pinhole 162 is a small hole for emitting laser light as a point-like light source. The light emitted from the pinhole spreads with an F-ratio of about 4, and is collimated into a collimated light beam by the collimator lens 17 arranged next to the pinhole. The collimated light beam passes through the half mirror 18, and enters the CGH mask plate 19. The first-order diffracted light is emitted therefrom while spreading toward the ground surface. Meanwhile, the zero-order diffracted light is emitted to the reference flat surface as the collimated light beam without changing its direction. When the light reflected and returning from the respective surfaces passes through the CGH mask 19 from the opposite direction, the reflected light from the ground surface is diffracted into the zero order, and the light returning from the reference flat surface is diffracted into the first order, to be reflected by the half mirror and travel toward the interferometer 21. At this point, both the reflected light beams illuminate the camera lens not as the collimated light beam, but as converging light beams. With the configuration, by imaging the entire ground surface by the CCD device, the shape and size of the ground surface and the interference pattern with the reference flat surface can be recorded.

### Fourth Embodiment (Processing and size and shape measurement of a concave axisymmetric aspherical lens)

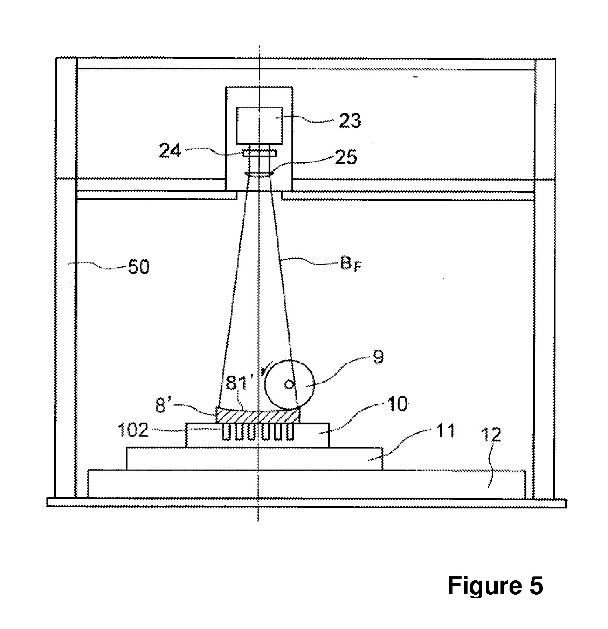

Figure 5 is an elevational schematic view of an apparatus for processing and measuring a concave non-axisymmetric aspherical lens according to a fourth embodiment.

In the second and third embodiments, the ground surface shape of the concave non-axisymmetric aspherical surface is measured by using the interferometer and the CGH mask corresponding to the surface shape. In the case of an axisymmetric aspherical surface, the measurement is performed using the interferometer and a null lens corresponding to the surface shape. In this case, a collimated light emitter and interferometer 23 that is an interferometer for emitting collimated light is arranged at a position corresponding to the center of an approximate spherical surface of the concave aspherical surface to be obtained. An F-light beam emitted from the collimated light emitter and interferometer 23 passes through the null lens 25 corresponding to the concave aspherical shape to be obtained after being transmitted through a reference flat surface half mirror 24, and illuminates an entire ground surface 81' to be measured. The light beam having an appropriate spread angle is reflected by the ground surface 81', and enters the null lens 25 again to be collimated light. An interference fringe between the reflected light from the reference flat surface half mirror 24 placed in front of the collimated light emitter and interferometer 23, and the collimated light entering the null lens 25 again is analyzed, so that the shape and size of the ground surface 81' is measured.

In the apparatus for processing and measuring a concave non-axisymmetric aspherical lens according to the fourth embodiment, the measuring section and the large precise grinding machine are integrated. Thus, the grinding can be performed by measuring the shape and size of the ground surface of the object to be ground having an axisymmetric aspherical shape, and immediately feeding back the measurement result to the grinding, repeatedly.

### Fifth Embodiment (Processing and size and shape measurement of a convex aspherical lens)

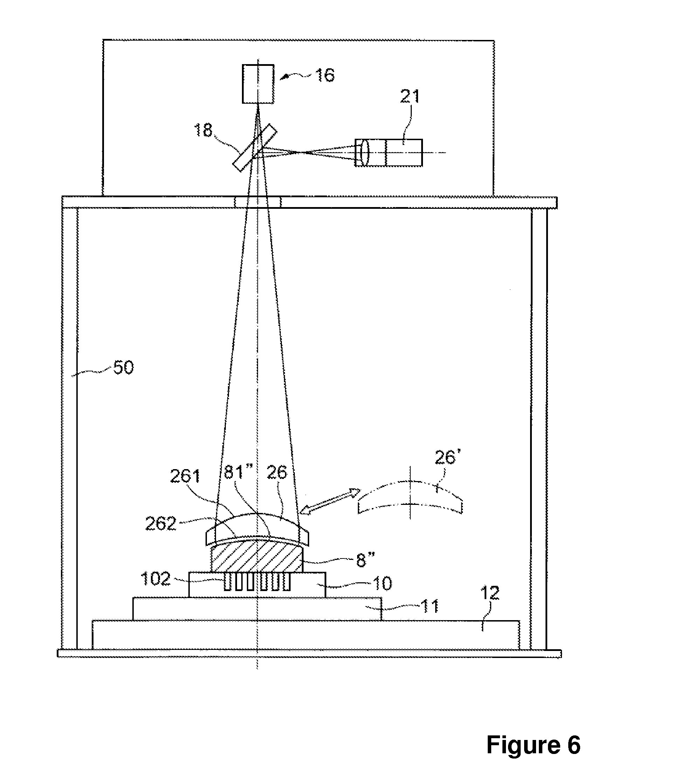

Figure 6 is an elevational schematic view of an apparatus for processing and measuring a convex aspherical lens according to a fifth embodiment.

All the second, third, and fourth embodiments are regarding the grinding and the shape and size measurement of the concave aspherical lens. In the fifth embodiment, the grinding is performed while on-machine measurement of a convex aspherical surface is performed, and the measurement result is fed back to the grinding.

A Hindle shell 26 is used as the null lens to perform the on-machine measurement of the convex surface during the grinding. The Hindle shell 26 is made of transmissive glass having a meniscus shape. An upper surface 261 thereof has a convex shape widely different from a spherical shape, and a lower surface 262 thereof is a concave surface corresponding to the shape of a ground surface 81" that is the convex aspherical surface to be obtained. The Hindle shell 26 can be moved to a standby position of a Hindle shell 26' as needed. The Hindle shell 26 is mounted on a movable mechanism which can be pulled in and out. To support the Hindle shell 26, a method of suspending the Hindle shell 26 with a wire from a pad attached to the upper surface side with a glass adhesive is generally employed, so that the Hindle shell 26 is moved to storage and measurement positions.

As shown in Figure 6, when an F-beam enters from the upper surface 261 of the Hindle shell 26, a light beam refracted to enter the glass is designed to be emitted in the normal direction of the aspherical surface of the lower surface 262. Accordingly, interference between the reflected light at the ground surface 81" and the reflected light at the lower surface 262 of the Hindle shell is observed and analyzed as an interference fringe, so that the surface shape can be measured at high accuracy.

### Industrial Applicability

As described above, according to the present invention, the optical interferometric measurement of the entire surfaces of the off-axis concave aspherical reflecting mirror or concave aspherical lens (the second and third embodiments), the axisymmetric concave aspherical reflecting mirror or concave aspherical lens (the fourth embodiment), and the convex aspherical reflecting mirror or convex aspherical lens (the fifth embodiment) is enabled by the on-machine measuring section integrally incorporated into the grinding machine. The measurement results can be immediately fed back to the grinding and a polishing process added thereto. Therefore, the aspherical surface can be effectively shaped at high accuracy, which is difficult to process in a normal grinding process. A predetermined surface roughness of Ra=10 nm or less can be achieved as the surface roughness of the ground surface by a polishing machine attached to the processing machine body.

Also, according to the workpiece supporting fixture of the present invention, the grinding and shaping process and size precise measurement can be alternately performed by automatically switching the grinding state and the simulated floating support state on site. Accordingly, the optical device deformed by its own weight can be precisely processed and manufactured (the first embodiment).

Although the second, third, fourth and fifth embodiments include the workpiece supporting fixture according to the first embodiment, a normal workpiece supporting fixture may be also used when the present invention is applied to an object to be ground such as a mold that is not deformed by its own weight.

The second and third embodiments may be applied to the grinding and the shape and size measurement of a mold used to manufacture a convex non-axisymmetric aspherical lens.

The fourth embodiment may be applied to the grinding and the shape and size measurement of a mold used to manufacture a convex axisymmetric aspherical lens.

The fifth embodiment may be applied to the grinding and the shape and size measurement of a mold used to manufacture a concave aspherical lens.

## Claims

1. A grinding apparatus for manufacturing an optical device that is deformed by its own weight, comprising a workpiece supporting fixture having a workpiece support surface shaped so as to closely contact a rear surface opposite to a ground surface of an object to be ground that is to be an optical device in a grinding state, wherein a plurality of piezoelectric actuator holes each having an open portion in the workpiece support surface and a central axis oriented vertically are provided at predetermined hole locations of the workpiece supporting fixture, and a piezoelectric actuator and a load cell are incorporated in each of the piezoelectric actuator holes in a liftable manner.

2. The grinding apparatus according to claim 1, wherein a plurality of thermal expansion actuator holes each having an open portion in the workpiece support surface and a central axis oriented vertically are provided at predetermined sub hole locations, and a thermal expansion columnar component and a heater for heating the columnar component are incorporated in each of the thermal expansion actuator holes.

3. The grinding apparatus according to claim 1 or 2, further comprising a control device for creating a simulated floating support state by comparing a measured load value measured by each of the load cells and a calculated load value to be obtained when the aspherical optical device is incorporated into a product at each of the hole locations, and controlling a projecting length of the piezoelectric actuator at each of the hole locations such that a difference between the measured load value and the calculated load value is equal to or less than a predetermined value.

4. A method for manufacturing an optical device that is deformed by its own weight, by using a grinding apparatus according to any one of claims 1 to 3, the method comprising alternately performing: a measuring step of obtaining a dimensional difference by comparing an intermediate shape and size of a ground surface of an object to be ground that is to be an optical device and a target shape and size of the ground surface at a predetermined point on the ground surface in a simulated floating support state; and a grinding step of performing grinding based on the dimensional difference at the predetermined point on the ground surface in a grinding state in which the object to be ground is in close contact with a workpiece support surface, without moving the object to be ground from the grinding apparatus.

5. A precise measuring apparatus for precisely measuring a shape and size of a mold used to manufacture a non-axisymmetric convex aspherical optical device or a shape and size of a non-axisymmetric concave aspherical optical device, wherein a collimated light generating device, a half mirror, a CGH mask corresponding to a shape and size of a ground surface to be obtained, and a material to be ground are sequentially disposed, a reference flat surface is disposed adjacent to the material to be ground, zero-th order diffracted light obtained by allowing collimated light from the collimated light generating device to travel straight through the CGH mask without being diffracted when transmitted through the CGH mask is projected onto the reference flat surface and light reflected from the reference flat surface is diffracted when transmitted through the CGH mask again to be first-order diffracted light, which is reflected by the half mirror and changes an optical path in a lateral direction to enter an interferometer as a first light beam, and first-order diffracted light obtained by diffracting collimated light from the collimated light generating device when transmitted through the CGH mask is projected onto the ground surface of the material to be ground that is to be a mold or an optical device and light reflected from the ground surface travels straight through the CGH mask without being diffracted when transmitted through the CGH mask again to be zero-th order diffracted light, which is reflected by the half mirror and changes an optical path in the lateral direction to enter the interferometer as a second light beam, the collimated light generation source, the half mirror, the CGH mask, the material to be ground, the reference flat surface, and the interferometer being arranged such that the interferometer can observe an interference fringe between the first light beam and the second light beam.

6. A precise measuring apparatus for precisely measuring a shape and size of a mold used to manufacture an axisymmetric convex aspherical optical device or a shape and size of an axisymmetric concave aspherical optical device, wherein a collimated light generating interferometer, a reference flat surface half mirror, and a null lens are sequentially disposed with optical axes of the collimated light generating interferometer, the reference flat surface half mirror, and the null lens being aligned with an axis of symmetry of a material to be ground that is to be a mold or an optical device.

7. A precise measuring apparatus for precisely measuring a shape and size of a mold used to manufacture an axisymmetric concave aspherical optical device, or a shape and size of an axisymmetric convex aspherical optical device, wherein an F-light generating device, a half mirror, a Hindle shell whose upper surface has a convex shape with a larger aspherical degree than that of a ground surface to be obtained and whose lower surface has a same concave shape as that of the ground surface to be obtained, and which is designed such that F-light generated by the F-light generating device is transmitted through the half mirror and travels straight to enter the Hindle shell from the upper surface, be refracted, and be emitted in a normal direction from the lower surface, and a material to be ground that is to be a mold or an optical device are sequentially disposed with optical axes of the F-light generating device, the half mirror, the Hindle shell, and the material to be ground being aligned with an axis of symmetry of the material to be ground, and an interferometer is disposed lateral to the half mirror such that light reflected by the ground surface of the material to be ground is reflected by the half mirror after passing through the Hindle shell, changes an optical path in a lateral direction, and enters the interferometer.

8. The precise measuring apparatus for precisely measuring a shape and size of an optical device according to any one of claims 5 to 7, wherein the material to be ground is placed on a workpiece supporting fixture according to any one of claims 1 to 3.

9. A grinding apparatus for manufacturing an optical device that is deformed by its own weight, wherein a precise measuring apparatus according to any one of claims 5 to 8, and a workpiece supporting fixture according to any one of claims 1 to 3 are incorporated into a frame having a vibration-free integral structure.
